# EUROPÄISCHE PATENTSCHRIFT

(11) **EP 0 594 534 B1**
(45) Veröffentlichungstag und Bekanntmachung des Hinweises auf die Patenterteilung: **16.04.1997**
(21) Anmeldenummer: 93810691.1
(22) Anmeldetag: 30.09.1993
(51) Int. Cl.: G01L 5/16, G01L 5/22, G01P 15/00, G01P 15/09

(54) **Mehrkomponenten-Kraft-und Momentmessanordnung**
Multicomponent force and moment measurement
Mesure de plusieurs composantes de force et de moment

(30) Priorität: 23.10.1992 CH 3292/92
(43) Veröffentlichungstag der Anmeldung: 27.04.1994
(73) Patentinhaber: K.K. HOLDING AG, CH-8408 Winterthur (CH)
(72) Erfinder: Engeler, Paul, CH-8500 Frauenfeld (CH); Giorgetta, Mario, CH-8408 Winterthur (CH)

(56) Entgegenhaltungen:
- EP-A- 0 133 997
- EP-A- 0 360 923
- EP-A- 0 459 068
- US-A- 3 364 368
- MESSEN UND PRUFEN, Bd. 27, Nr. 4, April 1991, München DE, Seiten 153-157, XP230054; C. CAVALLONI et al.: 'Dehnungsmessung im Inneren von Strukturen mit piezoelektrischen Sensoren'

## Beschreibung

Die Erfindung betrifft eine Messanordnung gemäss Oberbegriff von Anspruch 1; aus der EP-A-0133997 ist eine derartige Messanordnung bekannt.

Mit dieser Anordnung wird durch Summenbildung der Messwerte der beiden in einer Richtung im Abstand voneinander angeordneten Piezoelemente ein Signal gebildet, das dem Mittelwert des auf die beiden Elemente ausgeübten Druckes in Richtung der zweiten, nämlich der z-, Achse proportional ist. Aus der Differenz der Messwerte, die hier durch auf die Elemente ausgeübte Drehmomente erzeugt wird, werden zwei unterschiedliche Signale abgeleitet. Zum einen soll aus einem Gleichstrom- oder Niederfrequenzanteil eine Information über die Viskosität eines Objektes gewonnen werden, das von einem mit solchen Messanordnungen ausgerüsteten Roboterarm ergriffen wird; zum anderen wird aus einem Wechselstrom- oder Hochfrequenzanteil eine Aussage über die Gleitreibung zwischen dem genannten Objekt und dem Roboterarm hergeleitet. Als Hochfrequenz-Signal werden dabei die ruckartigen Wechsel zwischen Haft- und Gleitreibung gemessen. Eine Mehrkomponenten-Kraft- und/oder Moment-Messung wird hier weder durchgeführt noch vorgesehen, da als einzige Kraft die Druckkraft in Richtung der z-Achse ermittelt wird.

Mehrkomponenten-Kraftmessungen werden bisher mittels Dynamometer und mit Flach-Scheibensensoren durchgeführt. Für solche Anwendungen hat sich die Piezo-Messtechnik mit Quarzkristall-Messcheiben für Druck- und Schubbelastung bewährt. Die dazu verwendeten Quarzkristallscheiben sind alle im Longitudinalschnitt aus dem Quarzbarren geschnitten. Die Verwendung von Piezokeramiken wäre prinzipiell möglich. Weil jedoch eine statische Kalibrierbarkeit notwendig ist, konnten sich Piezokeramiken nicht einführen.

Weiterhin ist es bekannt, in piezoelektrischen Druckaufnehmern oder Dehnungsmesselementen Piezokristalle als Stabelemente im Transversalschnitt zu verwenden, siehe z.B. C. Cavalloni u.a. "Dehnungsmessung im Innern von Strukturen mit piezoelektrischen Sensoren" in "Messen und Prüfen" 27, Nr. 4, (April 1991), München, Seite 153 bis 157.

Aufgabe der Erfindung ist es, Mehrkomponenten-Messanordnungen für Kraft- und/oder Momentmessungen zu schaffen, die gegenüber den bisher verwendeten Scheiben-Kristallanordnungen eine um ein Vielfaches grössere Signalstärke und damit eine stark verbesserte Empfindlichkeit haben. Dadurch soll vor allem eine Miniaturisierung der Kraft- und Momentaufnehmer ermöglicht werden.

Diese Aufgabe wird mit der Erfindung dadurch gelöst, dass die Piezoelemente als sich in Richtung eine Achse erstreckende Stäbe ausgebildet und mit Hilfe einer dünnwandigen, elastischen Spannhülse auf Druck vorgespannt sind, und dass ferner die Krafteinleitelemente so mit den Piezoelementen verbunden sind, dass diese mindestens in Richtung einer weiteren, zur ersten orthogonalen Achse durch Biegemomente und/oder in Richtung der "Vorspannungs-"Achse durch Druck oder Zug belastet sind, und dass schliesslich in der Auswert-Schaltanordnung aus Summe und Differenz der Signalladungen mindestens das Biegemoment in Richtung der weiteren Achse ermittelt wird.

Die Erfindung beruht auf der neuen Erkenntnis, dass Piezo-Stabelemente im Transversalschnitt - wenn sie auf Biegung belastet werden - zur Erfassung von Biegemomenten eingesetzt werden können. Bei entsprechender Verarbeitung der daraus resultierenden Signale lassen sich dann nicht nur die Biegemomente bestimmen, sondern auch die diese erzeugenden Kräfte ermitteln.

Als Dynamometer weist die neue Messanordnung beispielsweise ein als Spannhülse ausgebildetes Gehäuse auf, in dessen vom Piezoelementensatz umringten Raum die Auswert-Schaltanordnung innerhalb einer Abschirmung untergebracht ist, wobei die Elektroden direkt zu den entsprechenden Ladungsverstärkern geleitet sind.

In Biomechanik und Sport hat sich die neue Anordnung als elastische Balkenplattform mit mindestens zwei Mess-Stellen zur Erfassung von Einzelkräften bewährt, wobei die Auswert-Schaltanordnung so ausgelegt ist, dass sie anhand der Bestimmung der von den Momentkräften erzeugten Druck- bzw. Zugkräften den Angriffspunkt der Summenkraft ermittelt. Für den gleichen Einsatz eignet sich jedoch auch eine starre Balkenplattform mit mindestens zwei Mess-Anordnungen, wobei der Krafteinleitungsteil jeder Messanordnung eine elastische Einschnürung aufweist, welche die Plattform elastisch anlenkt.

Für eine Messung von Längs- und Biegungskräften, zum Beispiel in Achsen von Maschinensäulen dergleichen, ist es zweckmässig, die Messanordnung als Dehnungsmesser zu kalibrieren.

In der Robotik ist eine Ausbildung als Joystick-Steuerung vorteilhaft, wobei Steuerbefehle für ein, zwei oder drei Komponenten gegeben werden können.

Schliesslich lässt sich die neue Anordnung auch zur Ermittlung von Beschleunigungen in Richtung mindestens einer Achse einsetzen, wofür die seismische Masse das Piezoelementensystem glockenförmig umringt, und die Beschleunigungskräfte im Schwerpunkt über einen Hebelarm auf den Krafteinleitungsteil einwirken.

Die Erfindung und weitere mit ihr zusammenhängende Merkmale und Vorteile sind nachstehend anhand der in der Zeichnung dargestellten Ausführungsbeispiele näher erläutert.

Es zeigen:
- Fig. 1.: einen Schnitt durch eine erfindungsgemässe Mehrkomponenten- Kraft- und Moment-Messanordnung;
- Fig. 2: einen Querschnitt nach der Linie II - II in Fig. 1;
- Fig. 3: einen Schnitt durch eine erfindungsgemässe Messanordnung mit zwei Paar Piezo-Stabelementen;
- Fig. 4: einen Querschnitt nach der Linie IV - IV in Fig. 3;
- Fig. 5: einen Querschnitt durch eine Messanordnung mit drei Piezo-Stabelementen;
- Fig. 6: eine Auswert-Schaltanordnung für einen Dreikomponenten-Kristallsatz entsprechend der Fig. 3 und 4;
- Fig. 7: die Verwendung einer erfindungsgemässen Messanordnung als Joystick-Steuerelement;
- Fig. 8: eine Ausführungsform mit einer Doppel-Messanordnung zwischen zwei parallelen Platten;
- Fig. 9: eine Dynamometer-Anordnung mit elastischer Deckplatte;
- Fig. 10: eine Dynamometer-Anordnung mit starrer Deckplatte;
- Fig. 11: eine erfindungsgemässe Messanordnung für den Einbau als Dehnungsmessaufnehmer in Maschinensäulen;
- Fig. 12: eine Messanordnung nach Fig. 11 für den Einbau in eine Platte;
- Fig. 13: eine erfindungsgemässe Messanordnung als Drei-Komponenten-Beschleunigungsaufnehmer;
- Fig.14: eine weitere Ausführungsform einer erfindungsgemässen Messanordnung als Dynamometer, und
- Fig.15: einen Querschnitt nach der Linie XV - XV in Fig. 14.

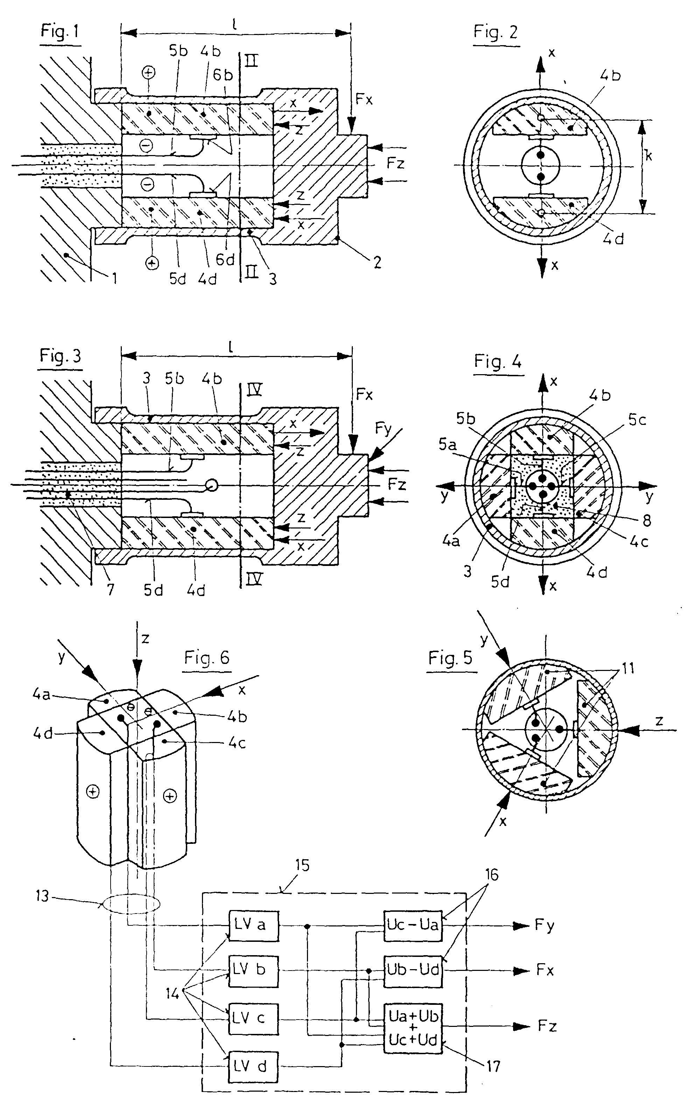

Die Messanordnung nach Fig. 1 und Fig. 2 besteht aus dem Körper 1 und der Deckplatte 2, die in eine elastische Spannhülse 3 übergeht, welche das Kristallpaar 4b, 4d umschliesst und unter mechanischer Vorspannung hält und mit dem Körper 1 fest verbunden ist. Das Kristallpaar 4b, 4d besteht aus zwei Stabkristallen mit z.B. kreissegmentförmigem Querschnitt (Fig. 2). Die Kristallstäbe sind im Transversalschnitt aus dem piezoelektrischen Material geschnitten. Vorzugsweise wird Quarz als Piezomaterial verwendet; es können aber auch andere geeignete Piezomaterialien in Frage kommen. Auch Piezokeramiken können zu solchen Piezostäben verarbeitet werden. Ausserdem können als Piezoelemente auch piezoresistive Stäbe verwendet werden.

Das Kristallpaar 4b, 4d ist so eingebaut, dass unter der Einwirkung einer Kraft Fx der Stab 4d belastet und der Stab 4b entlastet wird, weil die Stäbe beim Einbau unter mechanische Vorspannung gesetzt wurden. Im Transversalschnitt sind die Kristallstäbe so polarisiert, dass sie bei Belastung die negativen (-) elektrischen Landungen an den plan geschliffenen Innensegmentflächen an die Kontaktstellen 6b, 6d der Elektroden 5b, 5d abgeben, während die positiven (+) Ladungen an den zylindrischen Aussenflächen direkt an die Spannhülse 3 abgeleitet werden.

Je nach Anwendung können gleichnamige Kristallpaare oder ungleichnamige verwendet werden. In Fig. 1 ist ein gleichnamiges Kristallpaar 4b, 4d gezeigt, d.h. bei Belastung entstehen an beiden Kontaktstellen 6b, 6d negative (-) Ladungen. Wenn z.B. nur Fx-Momente gemessen werden sollen, ist ein ungleichnamiges Kristallpaar von Vorteil, weil dann bei nicht gezeichneter gemeinsamer Elektrode, welche die Ladungen beider Kontaktflächen abnimmt, für die beiden Kristallstäbe selbsttätig eine Ladungsaddition entsteht.

Die Kraft Fx erzeugt über den Hebelarm 1 ein Biegemoment, das im Kristallpaar 4b, 4d ein Gegenmoment mit Entlastungs-Belastungs-Kräften über den Abstand k ihrer Schwerpunkte ergibt. Zusätzlich zur Biegekraft Fx wirkt eine positive Achsialkraft Fz direkt auf das Kristallpaar ein; diese Achsialkraft bzw. die achsiale Komponente einer beliebig gerichteten Kraft könnte auch entgegengesetzt, d.h. negativ gerichtet sein.

In den beiden Kristallstäben erfolgt selbsttätig eine Vektoraddition der Kräfte x und z, die in der anschliessenden elektronischen Aufarbeitung separat als Fx und Fz dargestellt werden, wie dies im Zusammenhang mit Fig. 6 gezeigt werden wird.

Fig. 3 und 4 zeigen eine ähnliche Anordnung wie Fig. 1 und 2. Um auch Kraftmomente in der y-Richtung zu messen, ist ein zweites Kristallpaar 4a, 4c eingesetzt. Die wiederum einen kreissegmentförmigen Querschnitt aufweisenden Kristallstäbe werden durch ein isolierendes Füllstück 8 - nur in Fig. 4 eingezeichnet - an die Wand der Spannhülse 3 gepresst, um einen einwandfreien Kontakt für die Ladungsabnahme zu gewährleisten. Alle Innenflächen der Kristallstäbe werden durch separate Elektroden 5a, 5b, 5c, 5d, kontaktiert, die durch den Isolator 7 in das Anschlusskabel führen. Mit dieser Anordnung können nun zwei orthogonale Momentenkräfte Fx und Fy neben den Achsialkräften Fz gemessen werden.

Fig. 5 zeigt eine deltaförmige Kristallstab-Anordnung 11, die für spezielle, nicht orthogonale Kraftrichtungen geeignet ist. Bei dieser Ausführungsform sind nur Teile benachbarter Kristallstäbe paarweise einander zugeordndet.

In Fig. 6 sind das Kristallpaket 4, gebildet aus den Einzelkristallpaaren 4a, 4b, 4c und 4d zusammen mit der Auswert-Schaltanordnung dargestellt, mit deren Hilfe die Signale aus den einzelnen Kristallstäben verarbeitet werden. Die einzelnen Stäbe werden nur auf Zug bzw. Druck beansprucht. Eine Zugbeanspruchung ist infolge der mechanischen Vorspannung des Kristallpakets im Sinne des Ausführungsbeispiels gemäss Fig. 3 möglich bis zur Grenze, wo die Vorspannung aufgehoben wird.

Es sind auch andere Formen der Kristallelemente möglich, z.B. solche mit rechteckförmigem Querschnitt oder solche mit quaderförmiger Gestalt. Ein Stabkristall mit kreissegmentförmigem Querschnitt hat den Vorteil, dass die Ladungen der metallisierten Aussenflächen direkt auf eine zylindrische Vorspannhülse 3 (Fig. 3) übertragen werden kann, wodurch keine Kontaktprobleme entstehen.

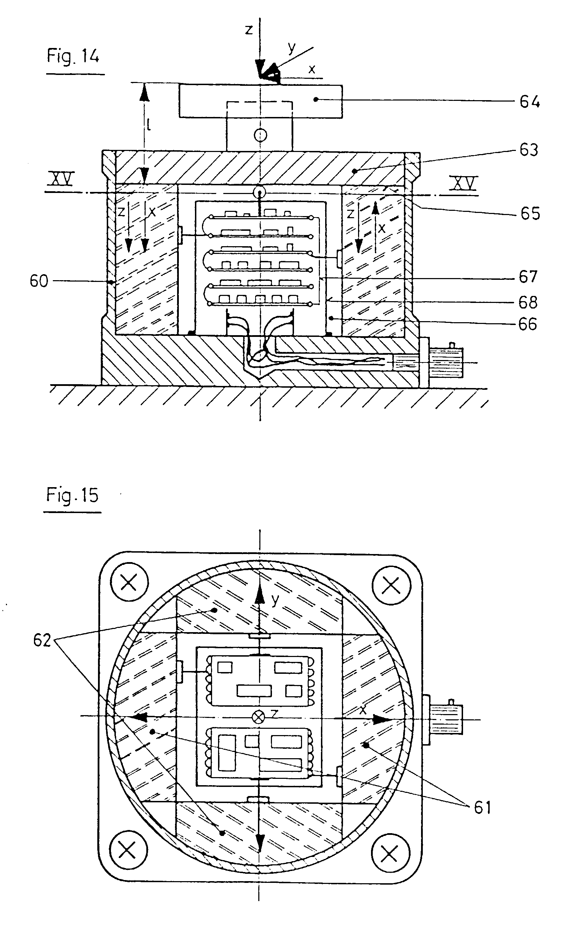

Die zu den einzelnen Elektroden führenden Leitungen sind im Kabel 13 zusammengefasst und werden dem Verstärkergehäuse 15 zugeführt. Im Verstärkergehäuse sind die vier Ladungsverstärker 14 eingebaut, ebenso die zwei Subtrahiergeräte 16 und das Summiergerät 17. Diese Geräte sind wie gezeigt so geschaltet, dass am Ausgang die gewünschten Kraftkomponenten Fy, Fx und Fz bereitstehen. Bei grösseren Ausführungen, z.B. als Dynamometer gemäss Fig. 14, kann die ganze Auswert-Schaltanordnung innerhalb des Kraftaufnehmers der Messanordnung untergebracht sein.

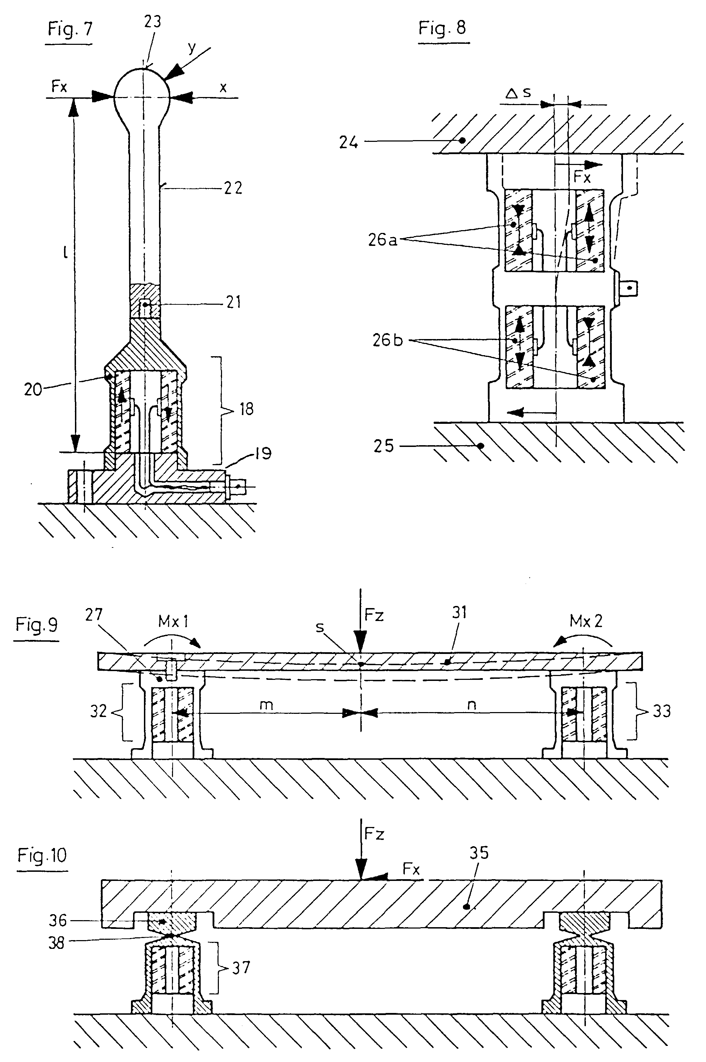

Fig. 7 zeigt eine Anwendung einer erfindungsgemässen Messanordnung als Joystick, z.B. als Handsteuerung für Bewegungsmechanismen. Die Messanordnung 18 ist auf dem Montagesockel 19 montiert. Die Spannhülse 20 geht in den Kraftanschluss 21 über, auf dem die Verlängerung 22 montiert ist, die im Griff 23 endet. Die Kräfte in der x-y-Ebene wirken über den Hebelarm 1 auf die Messanordnung 18. Wenn gewünscht, kann der Joystick auch für drei Komponenten, also zusätzlich für die achsiale z-Komponente, ausgerüstet sein.

Fig. 8 zeigt eine Doppelanordnung zwischen zwei parallel geführten Kraftplatten. Beide Kristallpakete 26a und 26b weisen je ein Paar Piezokristalle auf. Eine Parallelkraft Fx bewirkt neben einer Verschiebung der Platte 24 um den Weg Δ S in den Paketen gegenläufige Momente, die sich in der Signalverarbeitung summieren lassen. Es ist natürlich auch möglich, ein zusätzliches Kristallpaar im Sinne der Fig. 4 für Momentkräfte in Richtung der y-Achse vorzusehen.

In Fig. 9 ist als Beispiel ein Plattformbalken 31 mit verhältnismässig dünnem, elastischem Querschnitt gezeigt; der Balken 31 biegt sich unter dem Einfluss der Kraft Fz um den Betrag "s" durch. Diese Durchbiegung bewirkt in den beiden Kraft-Moment-Aufnehmern über den Übertragungsteil 27 die Momente Mx1 und Mx2. Der Angriffspunkt der Kraft Fz und seine Distanzen m, n von den Achsen der Mehrkomponenten-Aufnehmer kann durch einfache rechnerische Beziehung dargestellt werden. Solche Anordnungen können in leichten Biomechanik-Plattformen mit je drei bis vier Kraft-Moment-Aufnehmern 32, 33 vorteilhaft sein.

Fig. 10 zeigt im Gegensatz zu Fig. 9 einen starren Plattformbalken 35, der bei Belastung durch die Kraft Fz praktisch keine Durchbiegung erfährt. Damit Schubkräfte gemessen werden können, ist zwischen dem Kraft-Moment-Übertragungsteil 36 und dem Aufnehmer 37 eine elastische Einschnürungsstelle 38 vorgesehen. Auf diese Weise ist es möglich, eine auf den Balken wirkende Kraft Fx zu messen. Auch eine solche Anordnung kann z.B. für eine Biomechanik-Plattform mit drei oder mehr Aufnehmern 37 interessant sein.

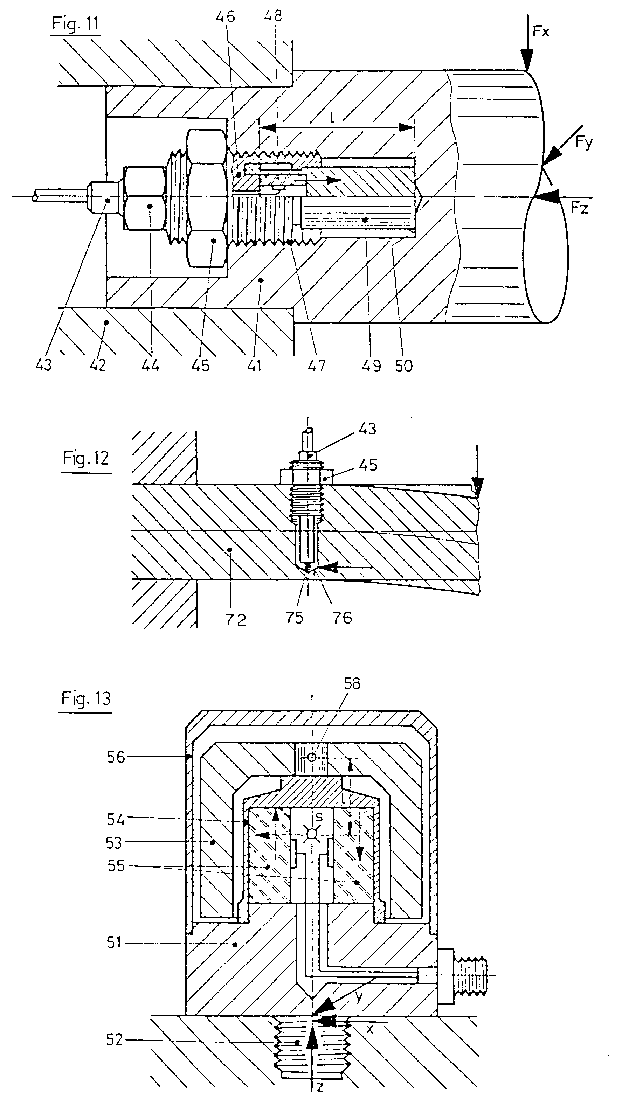

Fig. 11 zeigt eine erfindungsgemässe Messanordnung für den Einsatz als Mehrkomponenten-Dehnungsaufnehmer. Zu diesem Zweck muss der Kraft-Moment-Aufnehmer entsprechend kalibriert werden. Die gezeigte Anwendung eignet sich besonders zum Einbau in die Achsen von Maschinensäulen, z.B. von Spritzgiessmaschinen, Umformmaschinen, etc. Bei zyklischen Arbeitsvorgängen können z.B. die Verbiegungen infolge exzentrischer Kraftangriffe gemessen werden. Im gezeichneten Ausführungsbeispiel ist das kraftübertragende Ende 41 einer Maschinensäule mit dem Maschinenjoch 42 auf bekannte Weise verbunden. Der Kraft-Moment-Aufnehmer 43 ist mittels Montage- und Positionier-Sechskant 44 fest in die vorbereitete Bohrung montiert und richtungspositioniert nach den Richtungen der x- und y-Achsen; diese Position ist durch Gegenmutter 45 gesichert. Damit ist die Messbasis 46 fest in der Maschinensäule verankert, wobei das Montagegewinde 47 geeignet mechanisch von der Messbasis 46 isoliert ist. Der Kristallsatz 48 steht unter mechanischer Vorspannung, erzeugt durch das Spannelement 49, welches in reibungsfreiem Presskonktakt mit der Kraftschlussfläche 50 steht. Diese kann als Plan-, Kugel- oder Konusfläche ausgebildet sein. An der Kraftschlussfläche 50 werden die Kräfte Fx, Fy, Fz gemessen und als Dehnungen ausgewertet.

In Fig. 12 ist derselbe Aufnehmer 43, wie in Fig. 11 gezeigt, eingebaut in einer plattenförmigen Anordnung 72. Die Kraftübertragung erfolgt über die miteinander zusammenwirkende Kugel 75 und die Konusfläche 76, die ausserhalb der neutralen Achse der Platte 72 angeordnet sind.

Mehrkomponenten Kraft-Moment-Messanordnungen dieser Art ermöglichen eine neue messtechnische Erschliessung von komplexen Gebilden, wie z.B. bei Fahrzeugrädern, wo mittels Spezial-Dynamometern die Antriebs-, Steuer- und Bremsmomente von dynamischen Fahrtests ausgewertet werden können.

Fig. 13 zeigt eine Drei-Komponenten-Messanordnung zur Beschleunigungsmessung. Die Anordnung ist mit Hilfe von Montagekörper 51 und Montageschraube 52 an der Messstelle befestigt. Die glockenförmige Masse 54 umschliesst die innerhalb der Spannhülse befindliche Kristallanordnung 55. Mit dem Gehäusedeckel 56 wird der Aufnehmer gegen aussen abgeschlossen. Der Schwerpunkt "S" der Masse 53 befindet sich über die Hebellänge "1" vom Kraftleitelement 58 entfernt.

Die Funktionsweise ist überraschend einfach: In den Beschleunigungsrichtungen x und y wirkt die Massenträgheit über den Schwerpunkt "S" als Moment auf die Kristallanordnung 55. In der z-Richtung wirkt die Massenträgheits-Kraft direkt gleichmässig auf das ganze Kristallpaket.

Fig. 14 und 15 zeigen ein Dynamometer, z.B. für Mikrobearbeitung. Die Kristallpaare 61, 62 stehen unter mechanischer Vorspannung, die über die Spannhülse 60 durch die Deckplatte 63 erzeugt wird. Auf dieser ist ein Bearbeitungstisch 64 montiert, auf dem die zu bearbeitenden Mikroteile befestigt sind. Der Hebelarm "1" bildet sich zwischen Tischoberfläche und Momenteinleitfläche 65. Der durch die Kristallpaare 61, 62 gebildete kubusförmige Hohlraum 66 kann vorteilhaft zum Unterbringen der elektronischen Auswert-Schaltanordnung 67 ausgenützt werden, die sich im Inneren des Abschirmkäfigs 68 befindet; dies wird besonders dadurch ermöglicht, weil alle Einzelverstärker, wie auch die Summier- und Subtrahiergeräte einzeln auf genormten Platinen aufgebaut sind und auch zu anderen Anwendungen preisgünstig in grosser Zahl hergestellt werden können.

Der Querschnitt (Fig. 15) zeigt die segmentförmigen Kristalle 61, 62, die im Transversalschnitt aus den Quarzbarren geschnitten sind und bei Belastung auf der planen Innenfläche z.B. negative Ladungen und auf der zylindrischen Aussenfläche positive Ladungen abgeben. Sofern der andere Kristall des gleichen Paars bei gleicher Belastung wiederum auf der planen Innenfläche negative Ladungen und auf der Aussenfläche positive Ladungen abgibt, liegt ein gleichnamig gepoltes Kristallpaar vor. In vielen Fällen kann aber auch ein ungleichnamig gepoltes Kristallpaar Anwendung finden. Der Partnerkristall erhält dann den Zylinderschliff wie bekannt auf der negativen Seite.

Bei erfindungsgemässer Ausbildung der Messanordnung können insbesondere Moment- und Achsialkräfte gleichzeitig verarbeitet werden; letztere werden innerhalb der Kristalle summiert oder subtrahiert und der erhaltene Summand wird als Signalladung an die Messelektroden übertragen, von wo sie in die Auswert-Schaltanordnung geleitet werden. Dabei eignet sich eine erfindungsgemässe Anordnung für den Bau von Mehrkomponenten-Kraftaufnehmern, die sich vor allem für die Miniaturisierung eignen und bei kleinen Kräften bzw. Momenten ein hohes Signalniveau abgeben und sich darüber hinaus auch für Dehnungsmessung kalibrieren lassen.

Es wird so eine Reihe von neuen Anwendungen möglich, die bis anhin nicht realisierbar waren. Einige davon sind in den Figuren der Zeichnung veranschaulicht; es sind aber darüber hinaus weitere Anwendungen möglich.

## Patentansprüche

1. Mehrkomponenten-Kraft- und/oder Moment-Messanordnung, die mindestens ein Paar Piezoelemente (4;11;26;48;55;61,62) und mindestens ein die Piezoelemente (4;11;26;48;55;61,62) miteinander verbindendes Krafteinleitelement (2;21;27;36;58) enthält, wobei die Piezoelemente (4;11;26;48;55;61,62) in Richtung einer ersten Achse (x oder y) im Abstand voneinander angeordnet und in Richtung einer zweiten zur ersten orthogonalen Achse (z) auf Druck empfindlich sind, wobei ferner die Summe und die Differenz der Signale beider Piezoelemente (4;11;26;48;55;61,62) in einer Auswert-Schaltanordnung (15;67) gebildet und weiterverarbeitet werden, dadurch gekennzeichnet, dass die Piezoelemente (4;11;26;48;55;61,62) als sich in Richtung der zweiten Achse (z) erstreckende Stäbe ausgebildet und mit Hilfe einer dünnwandigen, elastischen Spannhülse (3;20;54;60) auf Druck vorgespannt sind, und dass ferner die Krafteinleitelemente (2;21;27;36;58) so mit den Piezoelementen (4; 11;26;48;55;61,62) verbunden sind, dass diese mindestens in Richtung der ersten Achse (x oder y) durch Biegemomente und/oder in Richtung der zweiten Achse (z) durch Druck oder Zug belastet sind, und dass schliesslich in der Auswert-Schaltanordnung (15;67) aus Summe und Differenz der Signalladungen mindestens das Biegemoment in Richtung der ersten Achse (x oder y) ermittelt wird.

2. Messanordnung nach Anspruch 1, dadurch gekennzeichnet, dass die Piezoelemente (4;11;26;48;55;61,62) Quarzkristalle sind, die im Transversalschnitt so herausgeschnitten und so bearbeitet sind, dass sie an den Kraft- und Momenteinleitstellen keine Ladungen abgeben, wobei die Quarzkristalle innerhalb der Messanordnung parallele Transversalachsen aufweisen.

3. Messanordnung nach Anspruch 1, dadurch gekennzeichnet, dass die Piezoelemente aus Piezokeramik bestehen und entsprechend polarisiert sind.

4. Messanordnung nach Anspruch 1, dadurch gekennzeichnet, dass je zwei stabförmige Piezoelemente (4;11;26;48;55;61,62) paarweise derart orthogonal einander zugeordnet sind, dass die Biegemomente in beiden Richtungen (x und y) eines orthogonalen Koordinatensystems erfasst werden.

5. Messanordnung nach Anspruch 1, dadurch gekennzeichnet, dass die Piezoelemente (4;11;26;48;55;61,62) so angeordnet sind, dass die Biegemomente innerhalb eines nicht orthogonalen Systems erfasst werden.

6. Messanordnung nach Anspruch 1, dadurch gekennzeichnet, dass die Piezoelemente (4;11;26;48;55;61,62) einenkreissegmentförmigen Querschnitt haben.

7. Messanordnung nach Anspruch 1, dadurch gekennzeichnet, dass sie als Dynamometer mit einem als Spannhülse (63a) ausgebildeten Gehäuse gebaut ist, in dessen vom Piezoelementensatz (61,62) umringten Raum (66) die Auswert-Schaltanordnung (67) innerhalb einer Abschirmung (68) untergebracht ist, wobei die Elektroden direkt zu den entsprechenden Ladungsverstärkern geleitet sind (Fig. 14,15).

8. Messanordnung nach Anspruch 1, dadurch gekennzeichnet, dass sie als elastische Balkenplattform mit mindestens zwei Messanordnungen (32,33) zur Erfassung von Einzelkräften, z.B. in Biomechanik und Sport, eingesetzt wird, wobei die Schaltanordnung so ausgelegt ist, dass sie anhand der Bestimmung der von den Momentkräften erzeugten Druck- bzw. Zugkräften den Angriffspunkt der Summenkraft ermittelt (Fig. 9).

9. Messanordnung nach Anspruch 1, dadurch gekennzeichnet, dass sie als starre Balkenplattform (35) mit mindestens zwei Messanordnungen (37) ausgebildet ist, z.B. für den Einsatz in Biomechanik und Sport, wobei der Krafteinleitungsteil (36) jeder Messanordnung (37) eine elastische Einschnürung (38) aufweist, welche die Plattform (35) elastisch anlenkt (Fig. 10).

10. Messanordnung nach Anspruch 1, dadurch gekennzeichnet, dass sie als Dehnungsmesser kalibriert ist zwecks Messung von Längs- und Biegungskräften, z.B. in der Achse von Maschinensäulen oder dergleichen (Fig. 11).

11. Messanordnung nach Anspruch 1, dadurch gekennzeichnet, dass sie als Joystick-Steuerung ausgebildet ist, z.B. für den Einsatz in der Robotik, wobei Steuerbefehle in zwei- bzw. drei Komponenten gegeben werden können (Fig. 7).

12. Messanordnung nach Anspruch 1, dadurch gekennzeichnet, dass sie zur Ermittlung von Beschleunigungen in mindestens einer Achsrichtung des Koordinatensystems (x, y, z) ausgebildet ist, wobei die seismische Masse (53) das Piezoelementsystem (55) glockenförmig umringt, und die Beschleunigungskräfte im Schwerpunkt (S) über einen Hebelarm (1) auf den Krafteinleitungsteil (58) einwirken (Fig. 13).

## Claims

1. Multicomponent force and/or moment measuring arrangement comprising at least one pair of piezoelectric elements (4;11;26;48;55;61,62) and at least one force introduction element (2;21;27;36;58) joining the piezoelectric elements (4;11;26;48;55;61,62), whereby the piezoelectric elements (4;11;26;48;55;61,62) are arranged in the direction of a first axis (x or y) at a distance from each other and in the direction of a second axis (z) orthogonal to the first one and sensitive to pressure, and moreover the sum and difference of the signals from the two piezoelectric elements (4;11;26;48;55;61,62) are processed further in evaluation circuitry (15;67),
characterized by the piezoelectric elements (4;11;26;48;55; 61,62) being in the form of rods extending in the direction of the second axis and preloaded under pressure by means of a thin-walled elastic clamping sleeve (3;20;54;60), and furthermore the force introduction elements (2;21;27;36;58) being joined with the piezoelectric elements (4;11;26;48;55; 61,62) so that these are loaded by pressure or tension in the direction of at least the first axis (x or y) and/or in the direction of the second axis (z), and finally at least the flexural moment in the direction of the first axis (x or y) being determined in the evaluation circuitry (15;67) from the sum and difference of the signal charges.

2. Measuring arrangement according to claim 1 characterized by the piezoelectric elements (4;11;26;48;55;61,62) being quartz crystals cut out transversely and machined so that they yield no charges at the force and moment introduction points , whereby the quartz crystals have parallel transverse axes within the measuring arrangement.

3. Measuring arrangement according to claim 1, characterized by the piezoelectric elements consisting of piezoelectric ceramic and being polarized correspondingly.

4. Measuring arrangement according to claim 1, characterized by pairs of rod-shaped piezoelectric elements (4;11;26;48;55; 61,62) being allocated orthogonally to each other so that the flexural moments in both directions (x and y) of an orthogonal coordinate system are detected.

5. Measuring arrangement according to claim 1, characterized by the piezoelectric elements (4;11;26;48;55;61,62) being disposed so that the flexural moments of a non-orthogonal system are detected.

6. Measuring arrangement according to claim 1, characterized by the piezoelectric elements (4;11;26;48;55;61,62) having a segmental cross section.

7. Measuring arrangement according to claim 1, characterized by its being assembled as a dynamometer with a housing in the form of a clamping sleeve (63a), in the space (66) of which, ringed by a set of piezoelectric elements (61, 62), the evaluation circuitry (67) is accommodated inside shielding (68), the electrodes being led directly to the corresponding charge amplifiers (Figs. 14, 15).

8. Measuring arrangement according to claim 1, characterized by its use as elastic beam platform with at least two measuring arrangements (32, 33) for detecting individual forces, typically in biomechanics and sport, whereby the circuitry is designed to ascertain the application point of the sum force from the determination of the pressure and tensile forces generated by the moment forces (Fig. 9).

9. Measuring arrangement according to claim 1, characterized by its use as rigid beam platform (35) with at least two measuring arrangements (37) for use typically in biomechanics and sport, whereby the force introduction part (36) of each measuring arrangement (37) has an elastic constriction (38) articulating the platform (35) elastically (Fig. 10).

10. Measuring arrangement according to claim 1, characterized by being calibrated as extensometer for measuring longitudinal and flexural forces, e.g. in the axis of machine columns or similar (Fig. 11).

11. Measuring arrangement according to claim 1, characterized by taking the form of a joystick, typically for use in robotics, whereby control commands may be put in with two or three components (Fig. 7).

12. Measuring arrangement according to claim 1, characterized by being designed to determine accelerations in at least one axial direction of the coordinate system (x, y, z), whereby the seismic mass (53) surrounds the piezoelectric element system (55) like a bell and the acceleration forces at the centre of gravity (S) act on the force introduction part (58) through a lever arm (Fig. 13).

## Revendications

1. Dispositif de mesure de force et/ou de moment selon plusieurs composantes, comprenant au moins une paire d'éléments piéziques (4; 11; 26; 48; 55; 61; 62) et au moins un élément d'introduction de force (2; 21; 27; 36; 58) reliant entre eux les éléments piéziques (4; 11; 26; 48; 55; 61; 62), les éléments piéziques (4; 11; 26; 48; 55; 61; 62) étant disposés selon la direction d'un premier axe (x ou y) à une distance donnée les uns des autres et sensibles aux efforts de pression selon un deuxième axe (z) orthogonal au premier, la somme et la différence des signaux des deux éléments piéziques (4; 11; 26; 48; 55; 61; 62) étant en outre réalisée et traitée au sein d'un circuit de traitement (15; 67), caractérisé en ce que les éléments piéziques (4; 11; 26; 48; 55; 61; 62) qu'ils sont conçus sous forme de bâtonnets alignés selon la direction du deuxième axe (z) et sont précontraints en pression au moyen d'une douille de serrage élastique à paroi mince (3; 20; 54; 60) et que, de plus, les éléments d'introduction de force (2; 21; 27; 36; 58) sont reliés aux éléments piéziques (4; 11; 26; 48; 55; 61; 62) de sorte que ceux-ci soient sollicités au moins selon la direction du premier axe (x ou y) par des moments de flexion et/ou en direction du deuxième axe (z) par des contraintes de pression ou de traction et que finalement le circuit de traitement (15; 67) détermine au moins le moment de flexion selon la direction du premier axe (x ou y) en partant de l'addition ou de la soustraction des charges de signal.

2. Dispositif de mesure selon revendication 1 caractérisé en ce que les éléments piéziques (4; 11; 26; 48; 55; 61; 62) sont des cristaux de quartz taillés selon une coupe transversale et travaillés de sorte qu'ils ne transmettent pas de charge aux points d'application des forces et moments, les cristaux de quartz présentant des axes transversaux parallèles au sein du dispositif de mesure.

3. Dispositif de mesure selon revendication 1 caractérisé en ce que les éléments piéziques sont réalisés en céramique piézique et polarisée en conséquence.

4. Dispositif de mesure selon revendication 1 caractérisé en ce que les éléments piéziques en forme de bâtonnet (4; 11; 26; 48; 55; 61; 62) sont apairés orthogonalement les uns aux autres de manière à ce que le moment de flexion soit saisi selon les deux directions (x et y) d'un système de coordonnées orthogonales.

5. Dispositif de mesure selon revendication 1 caractérisé en ce que les éléments piéziques (4; 11; 26; 48; 55; 61; 62) soient apairés les uns aux autres de manière à ce qui le moment de flexion soit saisi selon un système non orthogonal.

6. Dispositif de mesure selon revendication 1 caractérisé en ce que les éléments piéziques (4; 11; 26; 48; 55; 61; 62) possèdent une section en forme de segment de cercle.

7. Dispositif de mesure selon revendication 1 caractérisé en ce qu'il est conçu en dynamomètre logé dans un boiter faisant office de douille de serrage (63a), le circuit de traitement (67) étant situé dans un blindage dans l'espace (66) entouré du jeu d'éléments piéziques (61, 62), les électrodes étant reliées directement aux amplificateurs de charge correspondant (Fig. 14, 15).

8. Dispositif de mesure selon revendication 1 caractérisé en ce qu'il est conçu comme plate-forme à poutre élastique avec au moins deux dispositifs de mesure (32, 33) pour la saisie des diverses forces comme, par exemple, en biomécanique et en sport, le circuit électrique étant conçu de telle manière qu'il puisse déterminer le point d'application de la force résultante à partir des forces de pression et de traction engendrées par les forces de moment.

9. Dispositif de mesure selon revendication 1 caractérisé en ce qu'il est conçu comme plate-forme à poutre rigide (35) possédant au moins deux dispositifs de mesure (37), par exemple, pour la mise en oeuvre en biomécanique et en sport, la pièce d'introduction de la force (36) de chaque dispositif possédant un étranglement (38) élastique (38) qui dévie élastiquement la plate-forme (35).

10. Dispositif de mesure selon revendication 1 caractérisé en ce qu'il est étalonné comme extensiomètre pour la mesure des forces longitudinales et de flexion, par exemple, selon l'axe du portique d'une machine ou semblables (Fig. 11).

11. Dispositif de mesure selon revendication 1 caractérisé en ce qu'il est conçu sous forme de commande du type Joystick pour la mise en oeuvre, par example, dans le domaine de la robotique, les ordres de commande pouvant être donné selon deux resp. trois composantes (Fig. 7).

12. Dispositif de mesure selon revendication 1 caractérisé en ce qu'il est conçu pour la détermination des accélérations selon au moins une direction d'axe du système de coordonnées (x, y, z), la masse sismique (53) englobant le système d'éléments piéziques (55) et les forces d'accélération au centre de gravité (s) agissant par un bras de levier (1) sur la partie d'introduction des forces (Fig. 13).
